**Europäisches Patentamt**

**European Patent Office**

**Office européen des brevets**

(11) Veröffentlichungsnummer: **0 213 294**
**B1**

(12) ## EUROPÄISCHE PATENTSCHRIFT

(45) Veröffentlichungstag der Patentschrift:
26.07.89

(51) Int. Cl.⁴: **F 16 J 1/16**

(21) Anmeldenummer: **86108147.9**

(22) Anmeldetag: **14.06.86**

(54) Kolbenbolzen.

(30) Priorität: **19.06.85 DE 3521796**

(43) Veröffentlichungstag der Anmeldung:
**11.03.87 Patentblatt 87/11**

(45) Bekanntmachung des Hinweises auf die Patenterteilung:
**26.07.89 Patentblatt 89/30**

(84) Benannte Vertragsstaaten:
**DE FR GB IT**

(56) Entgegenhaltungen:
**EP-A- 0 071 994**
**DE-A- 2 455 750**
**DE-B- 1 025 671**
**DE-B- 1 025 672**
**US-A- 1 568 209**

(73) Patentinhaber: **KOLBENSCHMIDT Aktiengesellschaft,
Karl-Schmidt-Strasse 8/12 Postfach 1351,
D-7107 Neckarsulm (DE)**

(72) Erfinder: **Mielke, Siegfried, Dr., Leipziger Strasse 111,
D-7107 Neckarsulm (DE)**

(74) Vertreter: **Rieger, Harald, Dr., Reuterweg 14,
D-6000 Frankfurt am Main (DE)**

## Beschreibung

Die Erfindung betrifft einen Kolbenbolzen mit durchgehender Bohrung, deren Durchmesser 75 bis 90% des Außendurchmessers des Kolbenbolzens beträgt und in der im Bereich der Innenkante der Bolzennaben jeweils eine Verstärkungsrippe angeordnet ist, wobei der Abstand von Mitte zu Mitte der Verstärkungsrippen dem Innenabstand der Bolzennaben entspricht.

Der Kolbenbolzen, der das kraftübertragende Verbindungsglied zwischen Kolben und Pleuel ist, wird durch die an ihm angreifenden Gas- und Massenkräfte auf Durchbiegung, Ovalverformung und in bestimmten Querschnitten auf Scherung beansprucht, wobei sich sowohl der Kolbenbolzen als auch die Bolzennaben elastisch verformen. Die im lastfreien Zustand zylindrischen, zueinander parallelliegenden Kontaktflächen von Kolbenbolzen und Bolzennaben krümmen und verkanten sich, so daß sich örtliche Flächenpressungsspitzen ausbilden. Zusammen mit der in Umfangsrichtung der Bolzennaben wirkenden Zugspannung kann diese Beanspruchung die Dauerschwingfestigkeit des Kolbenwerkstoffs überschreiten und zu Ermüdungsrissen im Bolzennabenscheitel, den sogenannten Nabenspaltrissen, führen. Um das zu vermeiden, sind verformungsarme Kolbenbolzen, d.h. Bolzen mit großer Wanddicke, erforderlich. Diese Forderung widerspricht jedoch dem Bestreben nach möglichst geringen Massen und kompakter Bauweise des Triebwerks der Brennkraftmaschine. Abgesehen von einer Verstärkung der Wanddicke ist eine weitere geeignete Maßnahme, den Kolbenbolzen im Bereich der Innenkanten der Bolzennaben jeweils durch eine umlaufende Rippe zu verstärken (US-A-1 568 209). Kolbenbolzen mit einer solchen, vergleichsweise dünneren Wanddicke ertragen besser die in Richtung der Bolzenachse wirkenden Zug- und Druckspannungen. Die diese Spannungen überlagernden Spannungen aus der Scherbeanspruchung und der Ovalverformung werden durch die auf der Innenseite der Bohrung befindlichen Verstärkungsrippen aufgenommen.

Es ist die Aufgabe der vorliegenden Erfindung, dem Kolbenbolzen mit durchgehender bohrung, deren Durchmesser 75 bis 90% des Außendurchmessers des Kolbenbolzens beträgt und in der im Bereich der Innenkante der Bolzennaben jeweils eine Verstärkungsrippe umläuft, eine belastungsoptimale Form zu geben, um eine weitere Steigerung der Belastbarkeit und Lebensdauer der Bolzennaben bei möglichst geringem Gewicht zu erreichen.

Die Lösung dieser Aufgabe besteht in einem Kolbenbolzen mit durchgehender Bohrung, wobei der Durchmesser der Bohrung im Bereich der einen trapezförmigen Querschnitt mit verrundeten Kanten und Übergängen besitzenden Verstärkungsrippen höchstens dem 0,75fachen des Außendurchmessers des Kolbenbolzens entspricht, in der Kolbenbolzenbohrung 5 bis 15 mm von den Enden des Kolbenbolzens entfernt jeweils eine weitere Verstärkungsrippe angeordnet ist, die Breite der Verstärkungsrippen 10 bis 30%, vorzugsweise 15 bis 25% der Länge des Kolbenbolzens beträgt.

Aus fertigungstechnischen Gründen ist es angebracht, wenn die Verstärkungsrippen einen trapezförmigen Querschnitt mit verrundeten Kanten und Übergängen aufweisen.

Zusätzlich kann in der Mitte der Kolbenbolzenbohrung eine Verstärkungsrippe angeordnet sein. Der trapezförmige Querschnitt der in der Mitte und/oder im Bereich der Enden der Kolbenbolzenbohrung verlaufenden Verstärkungsrippen ist vorzugsweise kleiner als derjenige der Verstärkungsrippen im Bereich der Innenkanten der Bolzennaben ausgebildet.

Durch die erfindungsgemäße Formgebung des Kolbenbolzens mit durchgehender Bohrung kann das Gewicht des Kolbenbolzens bis zu 40% — bezogen auf herkömmliche Kolbenbolzen — reduziert werden, ohne daß die Belastbarkeit und die Lebensdauer der Bolzennaben unter Berücksichtigung recht unterschiedlicher Randbedingungen beeinträchtigt werden.

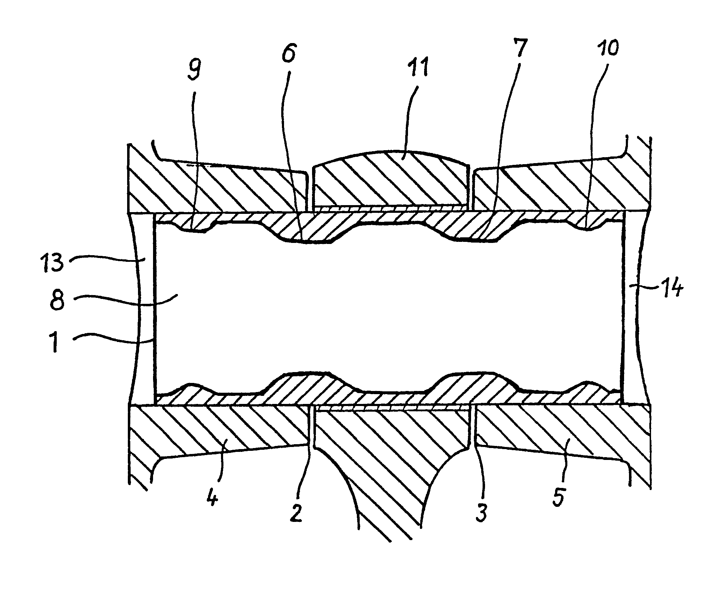

Die Erfindung ist in der Zeichnung beispielhaft dargestellt und wird nachfolgend erläutert:

Der im Längsschnitt dargestellte Kolbenbolzen 1 weist auf seiner Innenseite im Bereich der Innenkanten 2, 3 der Bolzennaben 4, 5 jeweils eine im Querschnitt trapezförmige Verstärkungsrippe 6, 7 auf, deren Übergänge verrundet sind. Die Bohrung 8 des Kolbenbolzens 1, die einen Durchmesser von 16 mm besitzt, verengt sich im Bereich der beiden Verstärkungsrippen 6,7 auf 13 mm. Zusätzliche Verstärkungsrippen 9, 10 sind, bezogen auf ihre Rippenmitte, jeweils 5 mm vom Ende des Kolbenbolzens 1 angeordnet. In diesem Bereich beträgt der Bohrungsdurchmesser 15 mm. Auf diese Weise kann bei einem Kolbenbolzen mit einem Außendurchmesser von 19 mm eine Gewichtsersparnis von ca. 30 g erzielt werden. Der Kolbenbolzen 1 ist mit dem Pleuelkopf 11 in dem nicht vollständig dargestellten Kolben 12 mit zylindrisch gebohrten Bolzenaugen 13, 14 eingesetzt.

Der mit dem erfindungsgemäß ausgebildeten Kolbenbolzen 1 ausgerüstete Kolben 12 wurde in einer Brennkraftmaschine einem Dauerlauftestprogramm unterzogen. Nach einem Dauerlauf von ca. 300 Std. konnte keinerlei Verschleiß am Kolbenbolzen oder an den Bolzennaben festgestellt werden. Eine Formänderung des erfindungsgemäß ausgebildeten Kolbenbolzens konnte nicht beobachtet werden.

## Patentansprüche

1. Kolbenbolzen mit durchgehender Bohrung, deren Durchmesser 75 bis 90% des Außendurchmessers des Kolbenbolzens beträgt und in der im Bereich der Innenkante der Bolzennaben jeweils eine Verstärkungsrippe angeordnet ist, wobei der Abstand von Mitte zu Mitte der Verstärkungsrippen (6, 7) dem Innenabstand der Bolzennaben (4, 5) entspricht, dadurch gekennzeichnet, daß der Durchmesser der Bohrung (8) im Bereich der einen trapezförmigen Querschnitt mit verrundeten Kanten und Übergängen besitzenden Verstärkungsrippen (6, 7) höchstens dem 0,75fachen des Außendurchmessers des Kolbenbolzens (1) entspricht, in der Kolbenbolzenbohrung (8) 5 bis 15 mm von den Enden des Kolbenbolzens (1) entfernt jeweils eine weitere Verstärkungsrippe (10) angeordnet ist, die Breite der Verstärkungsrippen (6, 7) 10 bis 30%, vorzugsweise 15 bis 25% der Länge des Kolbenbolzens (1) beträgt.

2. Kolbenbolzen nach Anspruch 1, dadurch gekennzeichnet, daß in der Mitte der Kolbenbolzenbohrung (8) eine zusätzliche Verstärkungsrippe angebracht ist.

3. Kolbenbolzen nach den Ansprüchen 1 und 2, dadurch gekennzeichnet, daß die in der Mitte und/oder im Bereich der Enden der Kolbenbolzenbohrung (8) angebrachte Verstärkungsrippe (9, 10) im Querschnitt kleiner als die Verstärkungsrippen (6, 7) im Bereich der Innenkanten (2, 3) der Bolzennaben (4, 5) ausgebildet ist.

## Claims

1. A gudgeon pin with a continuous bore, the diameter of which is 75 to 90% of the external diameter of the gudgeon pin and in which in each case a reinforcing rib is arranged in the region of the inner edge of the pin hub, the distance between the centres of the reinforcing ribs (6, 7) corresponding to the internal distance between the pin hubs (4, 5), characterised in that the diameter of the bore (8) in the region of the reinforcing ribs (6, 7), which have a trapezoidal corss-section with rounded edges and transitions, corresponds at most to 0.75 times the external diameter of the gudgeon pin (1), in each case an additional reinforcing rib (10) is arranged in the gudgeon pin bore (8) 5 to 15 mm away from the ends of the gudgeon pin (1), and the width of the reinforcing ribs (6, 7) is 10 to 30%, preferably 15 to 25%, of the length of the gudgeon pin (1).

2. A gudgeon pin according to Claim 1, characterised in that an additional reinforcing rib is attached in the centre of the gudgeon pin bore (8).

3. A gudgeon pin according to Claims 1 and 2, characterised in that the reinforcing rib (9, 10) attached in the centre and/or in the region of the ends of the gudgeon pin bore (8) is smaller in cross-section than the reinforcing ribs (6, 7) in the region of the inner edges (2, 3) of the pin hubs (4, 5).

## Revendications

1. Axe de piston à alésage traversant, dont le diamètre atteint 75 à 90% du diamètre extérieur de l'axe de piston et dans lequel est prévue, dans la zone de chacun des bords intérieurs du moyeu de l'axe de piston, une nervure de renforcement, la distance de milieu à milieu des nervures de renforcement (6, 7) correspondant à la distance intérieure entre moyeux d'axe (4, 5), caractérisé en ce que le diamètre de l'alésage (8), dans la zone des nervures de renforcement (6,7) qui possèdent une section trapézoïdale à bords et chanfreins ou passages arrondis, correspond au maximum à 0,75 fois le diamètre extérieure de l'axe de piston (1), que dans l'alésage de l'axe de piston (8), et à 5 à 15 mm est placée à chacune des extrémités de l'axe de piston (1) est prévue une nervure de renforcement supplémentaire (10), et que la largeur des nervures de renforcement (6, 7) est égale à 10 à 30%, avantageusement à 15 à 25%, de la longueur de l'axe de piston (1).

2. Axe de piston selon la revendication 1, caractérisé en ce que dans le milieu de l'alésage de l'axe de piston (8), est prévue, en supplément, une nervure de renforcement.

3. Axe de piston selon les revendications 1 et 2, caractérisé en ce que la nervure de renforcement (9, 10) prévue dans le milieu et/ou dans la zone des extrémités de l'alésage de l'axe de piston (8) possède une section transversale plus petite que celle des nervures de renforcement (6, 7) prévues dans la zone des bords intérieurs (2, 3) des moyeux de l'axe (4, 5).